# EUROPEAN PATENT APPLICATION

(11) **EP 4 621 286 A1**
(43) Date of publication of application: **24.09.2025**
(21) Application number: 25164564.4
(22) Date of filing: 18.03.2025
(51) Int. Cl.: F21S 43/14, F21S 43/236, F21S 43/241, F21S 43/243, F21S 43/245, F21S 43/242, F21S 43/249, F21S 43/235, F21V 8/00, F21S 43/237, F21S 43/239

(54) **LIGHTING DEVICE**

(30) Priority: 18.03.2024 ES 202430191
(71) Applicant: Seat, S.A., 08760 Martorell - Barcelona (ES)
(72) Inventor: Piqué Cosconera, Xavier, Martorell (ES); Suñe Castilla, Monserrat, Martorell (ES); Alkorta Mayo, Kristina, Martorell (ES); Morón Morte, Juan Carlos, Martorell (ES)
(74) Representative: Pons IP

(57) **Abstract**

The present invention concerns a lighting device (D), comprising:
- a first elongated light guide (G1), with a light entry zone (G1e), an internal light transmission zone (G1t) and a light exit zone (G1s);
- a second elongated light guide (G2) that guides and redirects light beams transversely towards a first portion (G1e1) of the light entry zone (G1e); and
- an elongated optical receiving element (O) which transmits light beams transversely to a second portion (G1e2) of the light input zone (G1e).

The first light guide (G1) transmits to the outside the light transmitted through its internal light transmission zone (G1t) from the light beams entering through the first (G1e1) and second (G1e2) portions of the light entry zone (G1e).

## Description

### Technical field

The present invention concerns a lighting device which, by means of light guides and a receiving optical element comprised therein, provides homogeneous illumination through an elongated light exit zone.

### Prior art

There are lighting devices that include at least a first light guide, comprising a light entry zone, an internal light transmission zone and a light exit zone, optically communicating with each other following an optical path.

In some of these devices, especially but not only in those applied to vehicles, there is a problem that arises especially when trying to illuminate homogeneously with a very long light guide, for example when it runs across the entire width of a motor vehicle, since the illumination provided is not homogeneous, having a greater light intensity in the area closest to the light emitters that are arranged at its ends.

Sometimes, the light guide is split into two portions of shorter length and light emitters are placed at both ends of each of the light guide portions. Thus, the aforementioned problem is reduced in part, but not completely, and an additional problem arises especially in the central area, where both portions of the light guide meet or are located adjacent to each other, since this central area is poorly illuminated.

It is therefore necessary to offer an alternative to the prior art that fills the gaps found in the prior art by providing a lighting device that does not suffer from the above-mentioned problems associated with prior art lighting devices, and therefore really provides homogeneous illumination, even for an area as large as the width of a motor vehicle.

### Explanation of the invention

To that end, the present invention relates to a lighting device comprising at least a first light guide, comprising a light entry zone, an internal light transmission zone and a light exit zone, optically communicating with each other following an optical path.

Unlike the lighting devices of the prior art, in the present invention embodiment the lighting device further comprises, integrated in a body in which the first light guide is also integrated:
- a second light guide with at least a first section extending along a longitudinal direction, comprising at least one light entry at at least one of the free ends of said first section and a light outlet arranged on an elongated face along said longitudinal direction of at least said first section of said second light guide, and the second light guide being configured and arranged to guide along said second light guide light beams entering said at least one light entry and redirect them to said light exit so that they exit said light exit transversely to said longitudinal direction towards a first portion of said light entry zone; y
- a receiving optical element configured and arranged to receive light beams incident on a receiving face thereof and transmit them transversely to said longitudinal direction towards a second portion of said light input zone;
wherein the first light guide is configured and arranged to transmit to the outside of the body of the lighting device, through said light exit zone, the light which is transmitted through said internal light transmission zone coming from said light beams entering through the first and second portions of the light entry zone, at least part of the first light guide and part of its light exit zone being elongated according to a longitudinal direction.

It is thus possible to extract, by means of the first light guide, the light coming from both, the receiving optical element (direct illumination) and the second light guide (indirect illumination), thus providing homogeneous illumination through the elongated light exit zone in said longitudinal direction of the first light guide (even for a light exit zone as elongated as the width of a motor vehicle).

For an exemplary embodiment, at least the first section of the second light guide is cylindrical or nearly cylindrical in shape, with a flat contour portion defining the elongated light output face of at least the first section of the second light guide or which is optically coupled to an intermediate guide element (in general integrated into the body of the lighting device) with a flat face defining said elongated face.

According to an exemplary embodiment, the second light guide comprises a second section extending transversely to its first section, and an intermediate angled section arranged between the first and second sections, wherein a free end of said second section comprises a light entry, the second light guide being configured and arranged to guide along the same also light beams entering through the at least one light entry of the second span and redirect them to the light exit of the second light guide, so that they exit therefrom transversely to said longitudinal direction towards the first portion of the light entry zone. According to said embodiment example, the light entry is arranged transversely with respect to the first section of the second light guide and thus to the light outlet area of the first light guide. Consequently, it is difficult for light to be transmitted through the entire internal light transmission zone, making homogeneity of light difficult. This is why the light received by the receiving optical element, and transmitted to the internal light transmission zone by the second portion of the second light guide, makes it possible to compensate for this inhomogeneity.

According to an exemplary embodiment, the receiving optical element is an optical element elongated according to a longitudinal direction which, for some implementations of said exemplary embodiment, is at least partly coincident with, or at least partly parallel to, at least part of the longitudinal direction according to which the first section of the second light guide extends.

According to an exemplary embodiment, the first and second portions of the light entry zone of the first light guide are adjacent to each other, the first light entry zone being as a continuation to the second light entry portion, comprised in the same plane.

According to an exemplary embodiment, the receiving optical element is configured and arranged to transmit at least part of the light beams incident on a receiving face thereof towards the second portion of the light entry zone obliquely, with respect to the longitudinal direction according to which the first section of the second light guide extends, so that they enter a subzone of the internal light transmission zone of the first light guide existing between the first portion of the light entry zone and a portion of the light exit zone.

For an example of embodiment, the internal light transmission zone of the first light guide is configured and arranged to mix inside it and transmit through it the light coming from the light beams entering through the first and second portions of the light entry zone, thus achieving homogeneity in the light extracted through the light exit zone of the first light guide and, in particular, at said longitudinal end of the first light guide where the receiving optical element is located.

The lighting device of the present invention, according to an exemplary embodiment, further comprising a third light guide defined as the second light guide, with at least a first section extending according to a longitudinal direction, comprising at least one light entry at at least one of the free ends of said first section and a light outlet arranged on an elongated face according to said longitudinal direction of at least the first section of said third light guide, and said third light guide being configured and arranged to guide along said third light guide light beams entering said at least one light entry and redirect them to said light exit of said third light guide, so that they exit said third light guide transversely to said longitudinal direction towards a third portion of the light entry area of said first light guide, wherein the first light guide is configured and arranged to transmit to the outside of the body of the lighting device, through the light exit zone, also the light coming from said light beams entering through said third portion of the light entry zone.

For some implementations of said exemplary embodiment, the longitudinal direction according to which the first section of the third light guide extends is at least partly coincident with, or at least partly parallel to, at least part of the longitudinal direction according to which the first section of the second light guide extends.

According to an implementation of said exemplary embodiment, the second and third light guides are arranged symmetrically with respect to a plane of symmetry transverse to said longitudinal directions according to which the respective second and third light guides extend.

It is therefore a configuration where the second light guide and the third light guide extend in the longitudinal direction, one being adjacent to the other, but transmitting light in opposite directions. Accordingly, for an exemplary embodiment where it is desired to illuminate a light exit area extending across the width of a motor vehicle, the light entry of the second light guide and the light entry of the third light guide would be arranged in the central area of the vehicle, such that the second light guide and the third light guide transmit the light beams towards their respective end of the vehicle, according to the longitudinal direction.

According to an implementation of said exemplary embodiment, the third light guide comprises a second span defined as the second span of the second light guide, and said plane of symmetry runs parallel to and between the second spans of the second and third light guides.

For a variant of said implementation, the first, second and third portions of the light entry zone of the first light guide are adjacent to each other, the second portion being arranged between the first and third portions. Thus, the first, second and third light entry zones are a continuation of the adjacent light entry zone and lie in the same plane

According to an embodiment of said variant, the receiving optical element is configured and arranged to transmit at least part of the light beams towards the second portion of the light entry zone of the first light guide obliquely, with respect to the longitudinal directions according to which the first section of the second light guide and the first section of the third light guide extend, so that they enter respective sub-zones of the internal light transmission zone of the first light guide existing between the first portion of the light entry zone and a portion of the light exit zone and between the third portion of the light entry zone and a portion of the light exit zone. Thus, all light beams are mixed in the inner light transmission zone of the first light guide, thus achieving the desired homogeneity in the light exit zone of the light guide.

According to an exemplary embodiment, the first sections of the second and third light guides and the elongated optical element run in alignment with each other along an upper edge of the body of the lighting device.

For an implementation of said exemplary embodiment, the body of the lighting device includes a central region at the upper edge of which the elongated optical element is located, and, on either side of the central region, two side regions at the upper edges of which the first sections of the second and third light guides are respectively located, the light exit zone of the first light guide being arranged on at least part of a lower edge of said central and side regions.

According to a variant of said implementation, the separation between said upper and lower edge is greater in said central region than in said lateral regions.

For an exemplary embodiment, said central region of the lighting device body is shaped like an inverted triangle, converging from the upper edge to the lower edge.

For another example of embodiment, both said central region and the side regions of the body of the lighting device have elongated shapes, preferably with a separation between said upper and lower edge equal along the entire longitudinal direction.

According to an exemplary embodiment, the light exit zone of the first light guide comprises light extraction structures for extracting light to the outside of the lighting device body in a homogeneous manner.

According to an exemplary embodiment, the lighting device of the present invention comprises one or more first light sources (such as LEDs) configured and arranged to introduce light beams into the light input of the first section of the second light guide, and one or more second light sources (such as LEDs) configured and arranged to emit light beams to impinge on the first face of the receiving optical element.

For an exemplary embodiment, the lighting device of the present invention further comprises one or more third light sources (such as LEDs) configured and arranged to introduce a light beams into the light input of the second section of the second light guide.

According to an exemplary embodiment the lighting device of the present invention further comprises one or more fourth light sources (such as LEDs) configured and arranged to introduce a light beams into the light input of the second section of the third light guide.

According to an exemplary embodiment, the lighting device of the present invention comprises:
- one or more printed circuit boards with electrical/electronic circuitry, on which are mechanically and electrically connected the first(s) and second(s), or first(s), second(s) and third(s), or first(s), second(s), third(s) and fourth(s), light sources; and
- elements for positioning and fixing the printed circuit board(s) and the first and second, or first, second and third, or first, second, second, third and fourth, light sources so that they are arranged to perform the above-described introduction and incidence of light beams.

According to an implementation of said exemplary embodiment, the second(s), third(s) and fourth(s) light sources share a same printed circuit board.

### Brief description of the drawings

The foregoing and other advantages and features will be more fully understood from the following detailed description of some exemplary embodiments with reference to the attached drawings, which are to be taken by way of illustration and not limitation, wherein:
Figure 1 is a front perspective view of part of the lighting device proposed by the present invention, for an exemplary embodiment.
Figure 2 shows an enlarged detail of a central portion of the view of Figure 1, in particular of the receiving optical element of the lighting device proposed by the present invention.
Figure 3 is a front perspective view of the complete lighting device proposed by the present invention, for an exemplary embodiment.
Figure 4 shows the rear of an automobile vehicle including the lighting device proposed by the present invention, for an exemplary embodiment.

### Detailed description of some exemplary embodiments

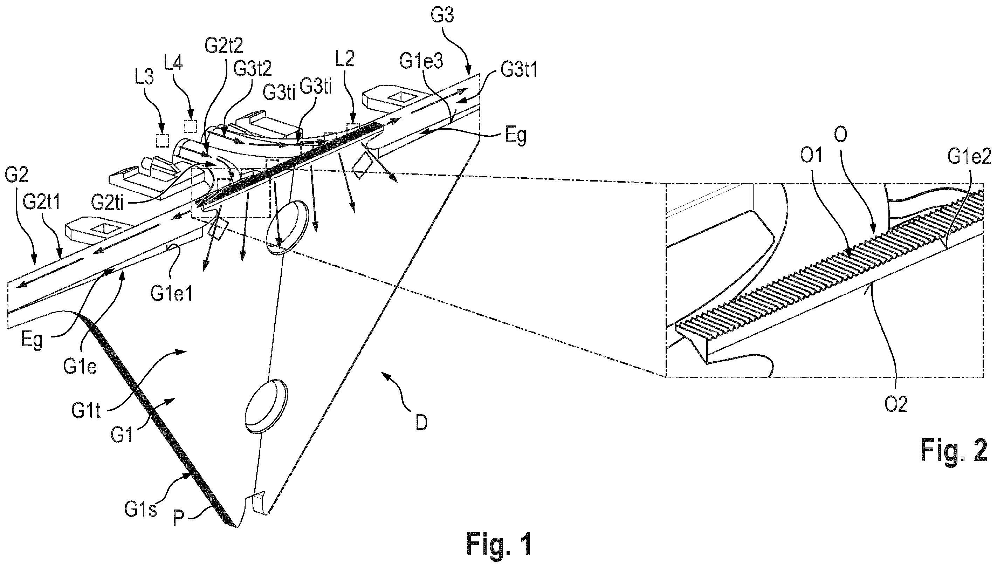

The attached figures, in particular Figure 1, show an exemplary embodiment in which the lighting device D of the present invention comprises, integrated in a single body, i.e., manufactured in a single body through a single productive process, for example, plastic injection molding:
- a first light guide G1, comprising a light entry zone G1e, an internal light transmission zone G1t and a light exit zone G1s, optically communicating with each other following an optical path;
- a second light guide G2 with a first section G2t1 extending in a longitudinal direction;
- a third light guide G3 defined as the second light guide G2, with a first section G3t1 extending in a longitudinal direction; and
- a receiving optical element O, which is elongated in a longitudinal direction.

The first light guide G1 comprises a substantially elongated geometry, extending along the longitudinal direction. In particular, the light entry zone G1e and the light exit zone G1s extend substantially parallel along said longitudinal direction, such that the internal light transmission zone G1t transmits the light received in the light entry zone G1e towards the light exit zone G1s substantially in a direction transverse to said longitudinal direction. As shown in said Figure 1, the first light guide G1 may comprise zones with a greater separation between the light entry zone G1e and the light exit zone G1s, so that both zones are not parallel along their entire length but, in general terms, the present invention seeks homogeneous illumination along the entire light exit zone G1s, which comprises an elongated geometry in said longitudinal direction.

The second light guide G2 comprises a light entry at a free end of the first section G2t1 and a light outlet arranged on an elongate face according to the longitudinal direction along which the first section G2t1 of the second light guide G2 extends, the second light guide G2 being configured and arranged to guide along the same a light beams entering through its light entry and redirect them to the light exit so that they exit therefrom transversely to the referred longitudinal direction towards a first portion G1e1 of the light entry zone G1e.

The third light guide G3 comprises a light entry at a free end of the first section G3t1 and a light outlet arranged on an elongate face according to the longitudinal direction along which the first section G3t1 of the third light guide G3 extends, the third light guide G3 being configured and arranged to guide along the same a light beams entering through its light entry and redirect them to the light exit of the third light guide G3, so that they exit therefrom transversely to the referred longitudinal direction towards a third portion G1e3 of the light entry zone G1e.

The receiving optical element O is configured and arranged to receive light beams incident on a receiving face O1 thereof and transmit them transversely to said longitudinal directions towards a second portion G1e2 of the light input zone G1e of the first light guide G1, i.e. to provide a direct illumination, as opposed to that provided by the second G2 and third G3 light guides which is an indirect illumination.

The receiving optical element O is configured and arranged to transmit at least part of the light beams it receives towards the second portion G1e2 of the light entry zone Ge obliquely (as indicated by the arrow lines starting therefrom in Figure 1), with respect to the longitudinal direction according to which the first section G2t1 of the second light guide G2 and the first section G3t1 of the third light guide G3 extend, so that they enter respective subzones of the internal light transmission zone G1t of the first light guide G1 existing between the first portion G1e1 of the light entry zone G1e and a portion of the light exit zone G1s and between the third portion G1e3 of the light entry zone G1e and a portion of the light exit zone G1s.

The first light guide G1 is configured and arranged to transmit to the outside of the lighting device body D, through the light exit zone G1s, the light transmitted through the internal light transmission zone G1t coming from the light beams entering through the first G1e1, second G1e2 and third G1e3 portions of the light entry zone G1e, part of the first light guide G1 and part of its light exit zone G1s being elongated according to a longitudinal direction.

As shown in Figure 1, the first sections G2t1, G3t1 of the second G2 and third G3 light guides G2 are cylindrical or nearly cylindrical in shape, with a flat contour portion defining the respective elongated light exit face of the respective first section G2t1, G3t1 or which is optically coupled to an intermediate guide element Eg (in general integrated in the body of the lighting device) with a flat face defining the respective elongated face.

Figure 1 shows how both the second G2 and third G3 light guides comprise a respective second span G2t2, G3t2 extending transversely to their first span G2t1, G3t1 and an intermediate angled span G2ti, G3ti disposed between the first G2t1, G3t2 and second G2t2, G3t1 spans respectively, wherein a free end of the second span G2t2, G3t1 comprises a light entry, the second G2 and third G3 light guides being configured and arranged to guide along the same also light beams entering through the light entry of the second span G2t2, G3t2 and redirect them to the light exit of the second light guide G2 so that they exit therefrom transversely to the respective longitudinal directions into the first G1e1 and third G1e3 portions, respectively, of the light entry zone G1e.

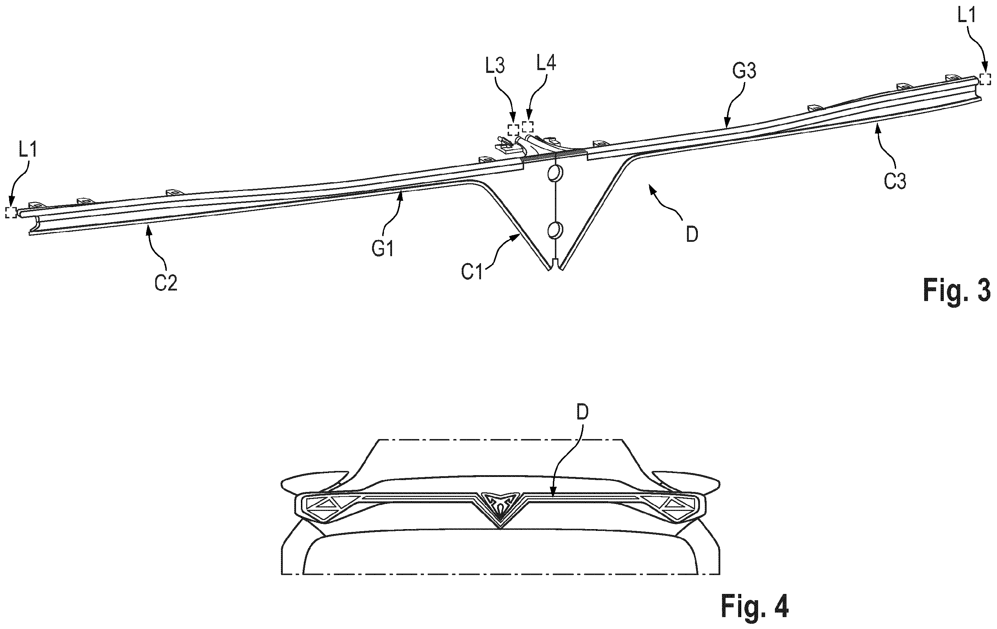

Figure 1 and 3 show how the second G2 and third G3 light guides are arranged symmetrically with respect to a plane of symmetry transverse to the longitudinal directions according to which the respective second G2 and third G3 light guides extend. This plane of symmetry runs parallel to and between the second sections G3t1, G3t2 of the second G2 and third G3 light guides.

As shown in said Figures 1 and 3, the light entering through the second section G2t2, G3t2 of the second G2 and third G3 light guide cannot directly or indirectly strike the light exit zone G1s of the first light guide G1. That is, the section of the light exit zone G1s adjacent to the aforementioned plane of symmetry would extract light of a lower intensity than the rest of the sections, which are indirectly illuminated by the light entering the first light guide G1 through the first portion G1e1 and the third portion G3e1 of the light entry zone G1e. A user would clearly observe that the central zone of the light fixture D does not generate homogeneous illumination with respect to the other side zones. In order to counteract such a deficiency, the light transmission zone G1t also receives light from the second portion G1e2 of the light input zone G1e, which has been transmitted from the receiving optical element O.

It is also apparent from Figure 1 that the first G1e1, second G1e2 and third G1e3 portions of the light entry zone G1e are adjacent to each other, for the illustrated exemplary embodiment, the second portion G1e2 being arranged between the first G1e1 and third G1e3 portions.

The internal light transmission zone G1t of the first light guide G1 is configured and arranged to mix within and transmit through it the light coming from the light beams entering through the first G1e1, second G1e2 and third G1e3 portions of the light entry zone G1e.

As shown in Figure 2, the receiving optical element O may comprise, either on the first face O1 or on the second face O2 optical structures configured to direct transversely to the longitudinal direction the light beams towards the light exit zone G1s. Notwithstanding, said optical structures may be configured to transmit the light beams non-parallel to each other by scattering them through the internal light transmission zone G1t so that they are mixed with the incoming light beams in said internal light transmission zone G1t through the first portion G1e1 and third portion G3e1 of the light entering zone G1e.

Figures 1 and 3 show how, for the exemplary embodiment illustrated therein, the first sections G2t1, G3t1 of the second G2 and third G3 light guides and the elongated optical element O run in alignment with each other along an upper edge of the body of the lighting device, and how the body includes a central region C1 at the upper edge of which the elongated optical element O is located, and, on either side of the central region C1, elongated side regions C2, C3 on the upper edges of which are located respectively the first sections G2t1, G3t1 of the second G2 and third G3 light guides, the light exit zone G1s of the first light guide G1 being arranged on at least part of a lower edge of the central C1 and side regions C2, C3.

For the illustrated exemplary embodiment, the separation between the top and bottom edge is greater in the central region C1 than in the side regions C2, C3, in this case because the central region C1 is shaped like an inverted triangle, converging from the top edge to the bottom edge.

However, such shape of the central region C1 is due to design criteria, in this case to adapt it to the shape required for incorporation into the rear of the motor vehicle in Figure 4.

Thus, for another embodiment example, not illustrated, both the aforementioned central region C1 and the side regions C2, C3 of the lighting device body D have elongated shapes.

In any case, it is achieved, by means of the lighting device D of the present invention, to provide homogeneous illumination through the elongated light exit zone G1s, which, as shown in Figure 1, comprises light extraction structures P for extracting light to the outside of the body in a homogeneous manner.

As it is shown in Figure 3, and in part of Figure 1, the lighting device D comprises first light sources L1 configured and arranged to introduce light beams into the light entries of the first section G2t1, G3t1 of the second G2 and third G3 light guides, second light sources L2 configured and arranged to emit light beams for incident on the first face O1 of the receiving optical element O, and third L3 and fourth L4 light sources configured and arranged to introduce light beams into the light inputs of the second section G2t2, G3t2 of the second G2 and third G3 light guides, respectively. It is shown how the light entries of the first section G2t1, G3t1 of the second G2 and third G3 light guides are at opposite ends to the light entries of the second section G2t2, G3t2 of the second G2 and third G3 light guides. Thus, the second G2 and third G3 light guides receive light at both longitudinal ends, but requiring the aforementioned second light sources L2 and the receiving optical element O described, in order to achieve homogeneity along the entire length of the light exit zone G1s of the first light guide G1.

A person skilled in the art could introduce changes and modifications to the described exemplary embodiments without departing from the scope of the invention as defined in the appended claims.

## Claims

1. Lighting device (D), comprising at least:
- a first light guide (G1), comprising a light entry zone (G1e), an internal light transmission zone (G1t) and a light exit zone (G1s), optically communicating with each other following an optical path;
**characterized in that** the lighting device (D) further comprises, integrated in a body in which said first light guide (G1) is also integrated:
- a second light guide (G2) having at least a first section (G2t1) extending along a longitudinal direction, comprising at least one light entry at at least one of the free ends of said first section (G2t1) and a light outlet arranged on an elongated face along said longitudinal direction of at least said first section (G2t1) of said second light guide (G2), and the second light guide (G2) being configured and arranged to guide along said second light guide (G2) light beams entering through said at least one light entry and redirect them to said light exit so that they exit said light exit transversely to said longitudinal direction towards a first portion (G1e1) of said light entry zone (G1e) of said first light guide (G1); y
- a receiving optical element (O) configured and arranged to receive light beams incident on a receiving face (O1) thereof and transmit them transversely to said longitudinal direction towards a second portion (G1e2) of said light input zone (G1e) of the first light guide (G1);
wherein said first light guide (G1) is configured and arranged to transmit to the outside of the body of the lighting device (D), through said light exit zone (G1s), the light transmitted by said internal light transmission zone (G1t) coming from said light beams entering through said first (G1e1) and second (G1e2) portions of the light entry zone (G1e), at least part of the first light guide (G1) and part of its light exit zone (G1s) being elongated according to a longitudinal direction.

2. Lighting device (D) according to any one of the claims, wherein at least said first section (G2t1) of the second light guide (G2) is cylindrical or nearly cylindrical in shape, with a flat contour portion defining said elongated light exit face of at least said first section (G2t1) of the second light guide (G2) or which is optically coupled to an intermediate guide element (Eg) with a flat face defining said elongated face.

3. Lighting device (D) according to claim 1, wherein the second light guide (G2) comprises a second section (G2t2) extending transversely to said first section (G2t1), and an intermediate angled section (G2ti) arranged between the first (G2t1) and second (G2t2) sections, wherein a free end of said second section (G2t2) comprises a light entry, the second light guide (G2) being configured and arranged to guide along the same also light beams entering through said at least one light entry of the second section (G2t2) and redirect them to said light exit of the second light guide (G2), so that they exit therefrom transversely to said longitudinal direction towards the first portion (G1e1) of said light entry zone (G1e).

4. Lighting device (D) according to any one of the claims, wherein said receiving optical element (O) is an elongated optical element (O) according to a longitudinal direction.

5. Lighting device (D) according to any one of the preceding claims, wherein the first (G1e1) and second (G1e2) portions of the light input zone (G1e) are adjacent to each other.

6. Lighting device (D) according to any one of the preceding claims, wherein said receiving optical element (O) is configured and arranged to transmit at least part of said light beams towards said second portion (G1e2) of said light entry zone (Ge) obliquely, with respect to said longitudinal direction according to which the first portion (G2t1) of the second light guide (G2) extends, so that they enter a subzone of the internal light transmission zone (G1t) of the first light guide (G1) existing between the first portion of the light entry zone (G1e) and a portion of the light exit zone (G1s).

7. Lighting device (D) according to any one of the preceding claims, wherein the internal light transmission zone (G1t) of the first light guide (G1) is configured and arranged to mix within it and transmit through it the light coming from the light beams entering through the first (G1e1) and second (G1e2) portions of the light entry zone (G1e).

8. Lighting device (D) according to any one of the preceding claims, further comprising a third light guide (G3) defined as the second light guide (G2), with at least one first span (G3t1) extending according to a longitudinal direction, comprising at least one light entry at at least one of the free ends of said first section (G3t1) and a light outlet arranged on an elongated face according to said longitudinal direction of at least said first section (G3t1) of said third light guide (G3), and said third light guide (G3) being configured and arranged to guide along said third light guide light beams entering through said at least one light entry and redirect them to said light exit of said third light guide (G3), so that they exit therefrom transversely to said longitudinal direction towards a third portion (G1e3) of said light entry zone (G1e), wherein the first light guide (G1) is configured and arranged to transmit to the outside of the body of the lighting device (D), through the light exit zone (G1s), also the light coming from said light beams entering through said third portion (G1e3) of the light entry zone (G1e).

9. Lighting device (D) according to claim 8, wherein said second (G2) and third (G3) light guides are arranged symmetrically with respect to a plane of symmetry transverse to said longitudinal directions according to which the respective second (G2) and third (G3) light guides extend.

10. Lighting device (D) according to claim 9 when depending, directly or indirectly, on 3, wherein the third light guide (G3) comprises a second section (G3t2) defined as the second section (G2t2) of the second light guide (G2), and wherein said plane of symmetry runs parallel to and between said second sections (G3t1, G3t2) of the second (G2) and third (G3) light guides.

11. Lighting device (D) according to claim 10 when dependent on 5, wherein the first (G1e1), second (G1e2) and third (G1e3) portions of the light input zone (G1e) are adjacent to each other, the second portion (G1e2) being arranged between the first (G1e1) and third (G1e3) portions.

12. Lighting device (D) according to claim 11, wherein said receiving optical element (O) is configured and arranged to transmit at least part of said light beams towards said second portion (G1e2) of said light entry zone (Ge) obliquely, with respect to said longitudinal directions according to which the first section (G2t1) of the second light guide (G2) and the first section (G3t1) of the third light guide (G3) extend, so that they enter respective subzones of the internal light transmission zone (G1t) of the first light guide (G1) existing between the first portion (G1e1) of the light entry zone (G1e) and a portion of the light exit zone (G1s) and between the third portion (G1e3) of the light entry zone (G1e) and a portion of the light exit zone (G1s).

13. Lighting device (D) according to any one of the preceding claims, comprising at least one first light source (L1) configured and arranged to introduce light beams into the at least one light entry of the first section (G2t1) of the second light guide (G2), and at least one second light source (L2) configured and arranged to emit light beams to strike said first face (O1) of the receiving optical element (O).

14. Device according to claim 13 when depending on 3, further comprising at least a third light source (L3) configured and arranged to introduce light beams into the at least one light entry of the second section (G2t2) of the second light guide (G2).

15. Device according to claim 13 or 14 when depending on 10, further comprising at least a fourth light source (L4) configured and arranged to introduce light beams into the at least one light entry of the second section (G3t2) of the third light guide (G3).
